# EUROPEAN PATENT APPLICATION

(11) **EP 1 091 308 A2**
(43) Date of publication of application: **11.04.2001**
(21) Application number: 00308379.7
(22) Date of filing: 25.09.2000
(51) Int. Cl.: G06F 17/60

(54) **Ticket processing system**

(30) Priority: 05.10.1999 GB 4102352
(71) Applicant: LUCENT TECHNOLOGIES INC., Murray Hill, New Jersey 07974-0636 (US)
(72) Inventor: Silberschatz, Abraham, Warren, New Jersey 07059 (US)
(74) Representative: Watts, Christopher Malcolm Kelway, Dr.

(57) **Abstract**

A ticket processing system in which a user indicates desired seats by entering seat constraints and the system searches a database of event matrices to determine the next available date on which the desired seats are available. The user may also enter date constraints such that the system will search for a next available date which also satisfies the date constraints. When seats are found, the system offers the seats to the user. If the user declines the seats, the system continues searching the database for the next available date, subsequent to the date of the offered seats, which satisfies the seat constraints, and date constraints if any.

## Description

### Field of the Invention

The present invention relates generally to automated ticket processing systems.

### Background of the Invention

Automated ticket processing systems provide for the automated selection, distribution, and/or payment of tickets for particular events (e.g., sporting or theatrical events). Such an automated ticket processing system may be a stand-alone system used by a ticket agent or, more likely, would be implemented as part of a communication network, for example a web based Internet service for processing tickets. One example of a current web based Internet ticket processing system is Ticketmaster Online, which currently may be accessed via the Internet at www.ticketmaster.com.

Ticketmaster Online allows a user to select an event, date, and desired seats, and the system will determine whether the desired seats are available for the chosen event and date. One problem with this system is that if the desired seats are not available for the chosen event on the chosen date, the customer must initiate another search for the desired seats for another date of the particular event. This system can be inconvenient to a customer looking for particular seats for a popular event.

### Summary of the Invention

The present invention solves the above identified problem by allowing a user to indicate desired seats and the ticket processing system will determine the next date on which the desired seats are available. Thus, a user who desires specific seats, but who is flexible with respect to dates, can easily obtain tickets to an event.

In accordance with an embodiment of the invention, the ticket processing system receives seat selection constraints which indicate the seats desired by a user. The system then searches a database containing seat availability information for a plurality of dates in order to determine the next available date on which seats satisfying the seat selection constraints are available. The user may optionally enter date constraints which indicate acceptable dates, and the system will search the database for the next available date which satisfies the date constraints and on which seats satisfying the seat selection constraints are available.

Once the system finds seats which satisfy the seat constraints, and date constrains if any, the tickets will be offered to the user. If the user does not accept the seats, the system will continue to search the database to determine a next available date subsequent to the date of the offered seats on which seats satisfying the seat selection constraints, and date constrains if any, are available.

These and other advantages of the invention will be apparent to those of ordinary skill in the art by reference to the following detailed description and the accompanying drawings.

### Brief Description of the Drawings

Fig. 1 shows a functional block diagram of a programmable computer in which the present invention may be implemented;
Fig. 2 shows an exemplary event matrix;
Fig. 3 shows an event matrix with a theater configuration overlay;
Fig. 4 shows a plurality of event matrices represented as a three dimensional array;
Fig. 5 is a flowchart showing the steps performed by a programmed computer in order to implement a ticket processing system in accordance with one embodiment of the invention; and
Fig. 6 shows exemplary event matrices.

### Detailed Description

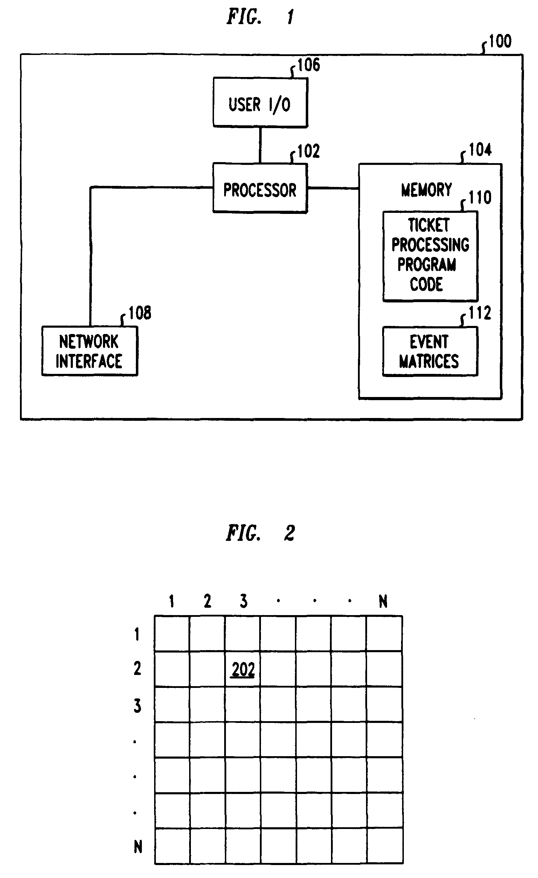

Fig. 1 shows a functional block diagram of a programmable computer in which the present invention may be implemented. The computer 100 contains a processor 102 which controls the overall operation of the computer 100 by executing computer program instructions which are stored in a memory 104 connected to processor 102. Memory 104 represents any type of computer readable medium, including without limitation, random access memory (RAM), read only memory (ROM), magnetic disk or tape, optical disk, or holographic memory. Memory 104 may be implemented using any computer readable medium technology, or a combination of such technologies. Processor 102 is also connected to user I/O 106 and a network interface 108. The user I/O 106 represents the elements which are used to interact with a user and may include, without limitation, a display screen, keyboard, pointing device (e.g. mouse), microphone, and speakers. The network interface 108 allows the computer 100 to communicate with other devices via a computer network, such as a local area network (LAN) or wide area network (WAN). Of course, Fig. 1 is a high level functional block diagram of only a portion of the components which are necessary for operation of a computer. Since the configuration and operation of programmable computers are well known in the art, for clarity, the details of computer 100 are not shown.

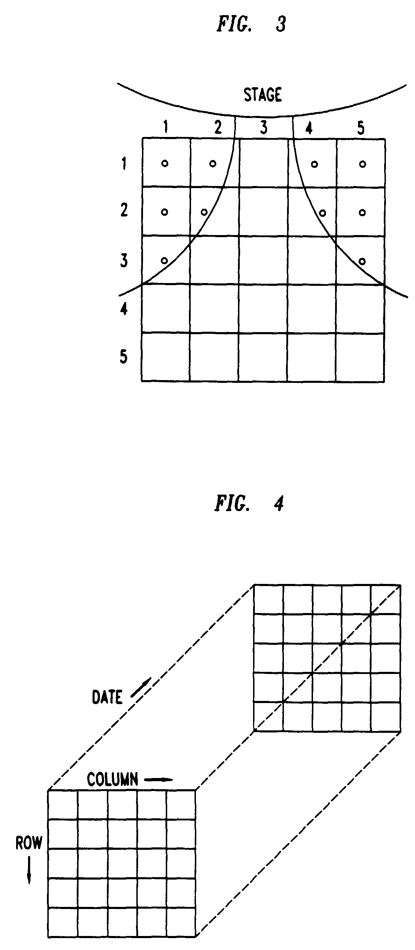

The computer 100 contains ticket processing program code 110 in memory 104 which contains computer program instructions to implement a ticket processing system. In the particular embodiment described herein, memory 104 also contains event matrices 112. An event matrix represents the seating chart for a particular event, at a particular venue, and for a particular date. An exemplary event matrix is shown in Fig. 2 as an NxN matrix where the seats at a particular venue are represented by entries in the matrix. Each entry in the matrix may be uniquely identified by *(row,column)*. Thus, for example, entry (2,3) is the entry at the intersection of the second row and third column, and is identified in Fig. 2 by the callout number 202. In accordance with one embodiment of the invention, each entry in the matrix may contain one of three values {0,1,2}. A 0 value indicates that the seat does not exist in the particular venue. For example, certain venues may not have a seating arrangement which is easily defined as an NxN matrix. For example, consider Fig. 3, which shows an event matrix with a particular theater configuration overlay. As can be seen in Fig. 3, in the particular seating configuration for this particular venue, seats at matrix entries (1,1), (1,2), (1,4), (1,5), (2,1), (2,2), (2,4), (2,5), (3,1), and (3,5) do not exist, and as a result, the corresponding matrix entries will contain the value 0. A matrix entry value of 1 indicates that the seat is available for a particular event on a particular date. A matrix entry value of 2 indicates that the seat is unavailable for a particular event on a particular date.

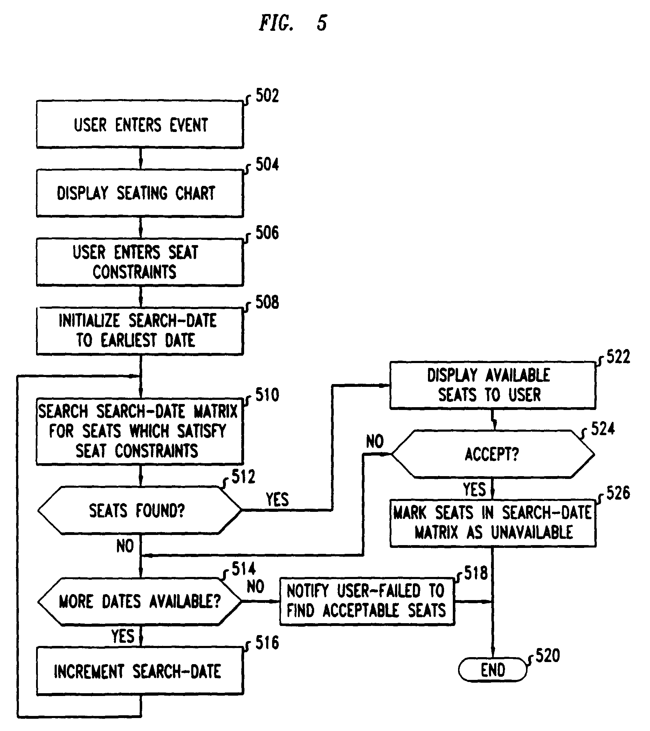

Consider now an event which has scheduled performances over a series of dates, for example a theatrical performance which is scheduled to run for 3 months at a particular venue. The seating availability for these performances may be represented as a plurality of event matrices, with one event matrix for each performance date. Such matrices could be represented in memory 104 as a three dimensional array as shown in Fig. 4. A three dimensional array is a data structure which is well known to those skilled in the art of computer science. Any particular entry in a particular event matrix may be uniquely identified by *(date,row,column)*, where *date* uniquely identifies one of the event matrices, and *row, column* identifies an entry in that matrix, as described above in conjunction with Fig. 2. One skilled in the art would recognize that the event matrices shown in Fig. 4 are for use when it is assumed that there is one event, or performance, per date. If there were multiple performances on a single date, then the *date* parameter would have to encode not only a particular date, but the particular performance (e.g., performance time) for the particular date.

Fig. 5 shows the steps performed by the computer 100 in order to implement a ticket processing system in accordance with one embodiment of the invention. As described above, these steps are performed under control of the processor 102 executing the ticket processing program code 110 stored in memory 104. Upon entry into the system, at step 502 the user will enter an event for which the user wishes to purchase tickets. The entry of the event will be through the user I/O 106. In step 504 a seating chart for the particular venue at which the event is being held will be displayed to the user via the user I/O 106. For example, the seating chart may be displayed graphically on a computer display screen. It is noted that at this point, no indication of available seating is given to the user. In step 506 the user enter seat constraints. These constraints indicate the type of seats that the user wishes to purchase. For example, by using a graphical pointing device, the user may identify particular seats, a seating section, or multiple seating sections. The seat constraints will also indicate the number of seats required, and whether the seats need to be consecutive or not. Since ticket purchasers generally request consecutive seats, if the user does not specify, consecutive seating would be a default. The graphical specification or seating constraints by a user may be accomplished using well known graphical user interface techniques.

In step 508 the system initializes a variable, search-date, to the earliest date of the event. For example, the earliest date may be the start date of the event, or may be the current day, or the day after the current day. Next, in step 510, the event matrix representing the seating availability for the search-date will be searched for seats which satisfy the user seat constraints. Thus, as described above, the event matrix identified by *(search-date, row, column)* will be accessed and searched for available seats. As described above, available seats are represented in the event matrix with a 1, so the event matrix will be searched for entries containing a 1 in seats which satisfy the seat constraints entered by the user. For example, suppose the user requested two consecutive seats in the first three rows of the venue. The search of step 510 would search rows 1 -3 of the event matrix for two consecutive entries containing the value 1. A matrix search as described above could be readily implemented by one of ordinary skill in the art of computer programming and the details of such a search algorithm will not be included herein.

Step 512 determines whether seats which satisfy the seat constraints were found in the event matrix for the particular search-date. If seats were not found, then in step 514 it is determined whether more dates are available for the particular event. If more dates are available, then the search-date is incremented to the next date of the event and control returns to step 510 to search the new event matrix representing the seating availability for the incremented search-date. These steps 510-516 are repeated until either seats satisfying the seat constraints are found (step 512) or until there are no more dates for the event (step 514). If no more dates are available, then in step 518 the user is notified that the search for seats satisfying the entered search constraints failed and the method ends in step 520. At this point, the user may be given the option of entering new seat constraints and repeating the search steps.

If seats satisfying the search constraints were found, then in step 522 the available seats are displayed to the user. This may be accomplished, for example, by highlighting the available seats on the seating chart which was displayed in step 504. In step 524 the user is given the option of accepting or rejecting the seats. If the seats are rejected, then control returns to step 514 and processing continues as described above in order to attempt to find acceptable seats for another date. If the seats are accepted, then in step 526 the corresponding entries in the event matrix for the current search-date are assigned the value 2 to represent that these seats are no longer available. The method ends in step 520. Of course, upon the acceptance of seats, the ticket processing system would engage the user in an appropriate payment and delivery interaction. However, such payment and delivery functions are well known and not the subject of the present invention.

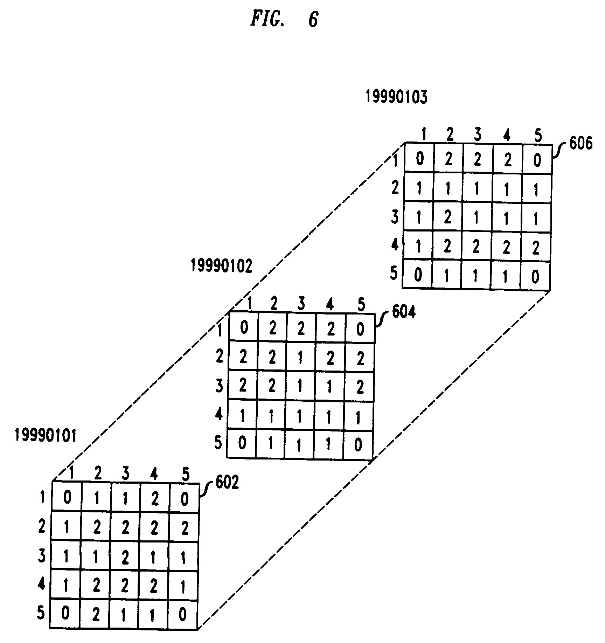

An example of processing in accordance with the flowchart of Fig. 5 will now be described. Consider, for example, the event matrices shown in Fig. 6. For purpose of simplicity of description, these matrices represent the seating availability for a small venue for an event taking place for three days. Of course, in an actual implementation, the venue will generally contain substantially more seats than shown, and the event will generally continue for longer than three days. The event matrices shown in Fig. 6 are stored in memory 104 as a three dimensional array data structure as is well known in the art. Event matrix 602 represents the seating availability for January 1, 1999 (represented as 19990101), event matrix 604 represents the seating availability for January 2, 1999 (represented as 19990102), and event matrix 606 represents the seating availability for January 3, 1999 (represented as 19990103). Thus, a particular row, column in event matrix 602 is accessed as *(19990101,row,column)*, a particular row, column in event matrix 604 is accessed as (*19990102 row,column*), and a particular row, column in event matrix 606 is accessed as (*19990103,row, column*).

Referring again to the steps of the flowchart of Fig. 5, consider the following example. In step 502 the user identifies the desired event and in step 504 the system displays the seating chart for the event. In step 506 the user enters seat constraints indicating that the user wants 3 consecutive seats in the first three rows. In step 508 search-date is initialized to 19990101 which is the first date for the event. In step 510 the event matrix identified by the search-date of 19990101, namely event matrix 602, is searched for 3 consecutive seats available within rows 1 through 3. As can be seen by event matrix 602, there are not three consecutive entries within rows 1-3 which contain a 1 and the seat constraints cannot be satisfied for the event on January 1, 1999. Thus, the test of step 512 is no and in step 514 it is determined that there are additional dates available. In step 516 search-date is incremented and set to 19990102. Control then returns to step 510. Step 510 now searches the event matrix identified by the search-date 19990102, namely event matrix 604, for 3 consecutive seats available within rows 1 through 3. As can be seen by event matrix 604, there are not three consecutive entries within rows 1-3 which contain a 1 and the seat constraints cannot be satisfied for the event on January 2, 1999. Thus, the test of step 512 is no and in step 514 it is determined that there are additional dates available. In step 516 search-date is incremented and set to 19990103. Control again returns to step 510. At this point, the search of step 510 finds that there are 3 consecutive seats available within rows 1 through 3. Thus, the test of step 512 is yes and in step 522 the available seats are displayed to the user.

As seen from event matrix 606, there are four sets of seats which satisfy the seat constraints. The four sets of seats satisfying the seat constraints are as follows:
set 1: (2,1), (2,2), (2,3)
set 2: (2,2), (2,3), (2,4)
set 3: (2,3), (2,4), (2,5)
set 4: (3,3), (3,4), (3,5)
As such, there are various alternatives for the display and accept steps (522 and 524). In one embodiment, the ticket processing program code 110 (Fig. 1) may contain an algorithm for making some judgment as to the "best" set of seats when multiple sets satisfy the seat constraints. For example, the algorithm may choose the center-most seats in the lowest row number, in which case the seats in set 2 would be chosen and displayed to the user in step 522. If the user rejected this set, the remaining sets could be offered in a similar manner. Alternatively, the sets could be offered sequentially, or only the first set which satisfies the seat constraints could be offered. One skilled in the art would recognize that there are various ways of handling multiple seat sets.

Assume for purposes of this example that the system contains an algorithm for choosing the "best" seats and that the seats in set 2 are displayed and offered to the user in step 522 and that the user accepts these seats. Then, in step 526 each of the corresponding entries in event matrix 606 must be marked with a 2 to indicate that the seats are no longer available. More particularly, the seats indexed by (*19990103,2,2*), (*19990103,2,3*), and (*19990103,2,4*) would be set to 2. The method ends in step 520.

As seen from the above description, the invention provides the advantage that a user may conveniently obtain tickets for an event when the user desires specific seats and is somewhat flexible with respect to event dates. The invention solves the prior problem of the user having to institute a separate search for the desired seats on multiple dates. Instead, the system finds the dates on which the desired seats are available and offers the seats to the user in a more convenient manner.

It is noted that if a particular event has a large number of available dates, and if the user has some date limitations, it may be inconvenient for the user to be offered seats for many dates which the user does not want until the desired dates are reached. As such, in accordance with another embodiment of the invention, the user may enter date constraints to limit the search to particular dates. The date constraints, like the seat constrains, may take various forms. For example, the date constraints may include a date range, weekend only, weekday only, particular days of the week only, or various other types of date constraints.

In accordance with another embodiment, the user may enter price constraints to limit the search to seats having a particular price or price range. Of course, in such an embodiment, price information for tickets would be stored in memory 104.

In a preferred embodiment, the computer 100 implementing the present invention is a network server which allows direct customer access via network interface 108. In this preferred embodiment, user interaction takes place via the I/O devices at the customer's access device (e.g. computer, telephone, television, etc.), rather than via user I/O 106.

Alternatively, computer 100 may be operated by a ticket agent who uses user I/O 106 and communicates with a customer (e.g. in person or via telephone).

The foregoing Detailed Description is to be understood as being in every respect illustrative and exemplary, but not restrictive, and the scope of the invention disclosed herein is not to be determined from the Detailed Description, but rather from the claims.

It is to be understood that the embodiments shown and described herein are only illustrative of the principles of the present invention and that various modifications may be implemented by those skilled in the art without departing from the scope of the invention.

## Claims

1. A method for operation of a ticket processing system, said method comprising the steps of:
receiving seat selection constraints; and
searching a database containing seat availability information for a plurality of dates to determine the next available date on which seats satisfying said seat selection constraints are available.

2. The method of claim 1 further comprising the step of:
receiving date constraints from said user; and
wherein said step of searching determines the next available date which satisfies said date constraints and on which seats satisfying said seat selection constraints are available.

3. The method of claim 1 further comprising the steps of:
offering seats available on said next available date to said user; and
if said user does not accept said offered seats, then continuing to search said database to determine a next available date subsequent to the date of said offered seats on which seats satisfying said seat selection constraints are available.

4. The method of claim 1 wherein said seat selection constraints include a number of seats and wherein said searching step searches for said number of seats satisfying said seat selection constraints.

5. The method of claim 4 wherein said number of seats is one.

6. The method of claim 4 wherein said number of seats is greater than one.

7. A computer readable medium storing computer program instructions defining the steps of:
receiving seat selection constraints; and
searching a database containing seat availability information for a plurality of dates to determine the next available date on which seats satisfying said seat selection constraints are available.

8. The computer readable medium of claim 7 further comprising computer program instructions defining the step of:
receiving date constraints from said user; and
wherein said step of searching determines the next available date which satisfies said date constraints and on which seats satisfying said seat selection constraints are available.

9. The computer readable medium of claim 7 further comprising computer program instructions defining the steps of:
offering seats available on said next available date to said user; and if said user does not accept said offered seats, then continuing to search said database to determine a next available date subsequent to the date of said offered seats on which seats satisfying said seat selection constraints are available.

10. The computer readable medium of claim 7 wherein said seat selection constraints include a number of seats and wherein said computer program instructions defining the step of searching further define the step of searching for said number of seats satisfying said seat selection constraints.

11. The computer readable medium of claim 10 wherein said number of seats is one.

12. The computer readable medium of claim 10 wherein said number of seats is greater than one.

13. A ticket processing system comprising:
means for receiving seat selection constraints; and
means for searching a database containing seat availability information for a plurality of dates to determine the next available date on which seats satisfying said seat selection constraints are available.

14. The ticket processing system of claim 13 further comprising:
means for receiving date constraints from said user; and
wherein said means for searching determines the next available date which satisfies said date constraints and on which seats satisfying said seat selection constraints are available.

15. The ticket processing system of claim 13 further comprising:
means for offering seats available on said next available date to said user; and
means for continuing to search said database to determine a next available date subsequent to the date of said offered seats on which seats satisfying said seat selection constraints are available if said user does not accept said offered seats.

16. The ticket processing system of claim 13 wherein said seat selection constraints include a number of seats and wherein said means for searching searches for said number of seats satisfying said seat selection constraints.

17. The ticket processing system of claim 16 wherein said number of seats is one.

18. The ticket processing system of claim 16 wherein said number of seats is greater than one.
